# EUROPEAN PATENT APPLICATION

(11) **EP 2 458 924 A1**
(43) Date of publication of application: **30.05.2012**
(21) Application number: 09848406.6
(22) Date of filing: 11.12.2009
(51) Int. Cl.: H04W 72/02, H04W 28/16

(54) **METHOD AND APPARATUS FOR COORDINATED MULTI-POINT PROCESSING**

(30) Priority: 19.08.2009 CN 200910167512
(71) Applicant: ZTE Corporation, Shenzhen, Guangdong 518057 (CN)
(72) Inventor: WEI, Wei, Shenzhen Guangdong 518057 (CN)
(74) Representative: Price, Nigel John King
(86) International application number: PCT/CN2009/075518
(87) International publication number: WO 2011/020265

(57) **Abstract**

The disclosure provides a method and apparatus for Coordinated Multiple Point (CoMP) processing. The method comprises: a Base Station (BS) to which a User Terminal (UT) belongs determines bandwidth capability and performance requirement of the UT, and makes itself as a temporary master coordinated BS of the UT to provide services for the UT; the BS receives inter-cell interference information reported from the UT, and selects a master coordinated BS to provide services for the UT according to the inter-cell interference information so that the master coordinated BS can perform CoMP processing. By the disclosure, the signaling interaction between the coordinated BSs and the UT can be significantly reduced during the CoMP transmission/reception, thereby decreasing the system overhead.

## Description

### TECHNICAL FIELD

The disclosure relates to the field of communications, and specifically to a method and apparatus for Coordinated Multiple Point (CoMP) processing.

### BACKGROUND

In the next generation broadband wireless communication network, it is a key factor and facing severe challenges to solve inter-cell User Terminal (UT) throughput and average UT throughput in the wireless communication network, particularly to solve the throughput and peak rate of cell-edge UTs.

At present, in the Institute of Electrical and Electronics Engineer (IEEE) 802.16j, International Mobile Telecom System Advanced (IMT-Advanced) and Wireless World Initiative New Radio (WINNER), it has been proposed to adopt a method of CoMP transmission/reception to solve this problem.

The basic concept of the CoMP transmission/reception refers to combined transmission and reception between multiple coordinated Base Stations (BSs) and a single UT on same radio resources, which has two essential features:
(1) each UT can be served by multiple BSs on the same radio resources through the coordination of BSs, by this way, the inter-cell interference can be eased or the interference can be changed into useful signal power.
(2) each BS can serve multiple UTs on the same radio resources, in this way, the throughput of all sectors can be improved.

However, during the implementation of the CoMP transmission/reception, it may cause waste of resources when same resources are used for serving one UT by multiple coordinated BSs; in the uplink with inter-cell interference, when performing the CoMP transmission/reception to the cell-edge UTs at the same time, it may cause serious inter-cell interference, thereby obviously decreasing the cell-edge throughput, peak rate and average cell throughput.

### SUMMARY

In allusion to the problems that it may cause waste of resources during the implementation of the CoMP transmission/reception and may obviously decrease the cell-edge throughput, peak rate and average cell throughput in related technologies, the disclosure mainly aims to provide a solution for the CoMP processing, thereby solving at least one of the above problems.

In order to achieve the above object, the solution of the disclosure is as follows.

A method for CoMP processing, comprising:
determining, by a BS to which a UT belongs, bandwidth capability and performance requirement of the UT, and making the BS itself as a temporary master coordinated BS of the UT to provide services for the UT;
selecting, by the BS to which the UT belongs, a master coordinated BS for performing CoMP processing to provide services for the UT according to inter-cell interference information reported from the UT

The method may further comprise: before the BS receives the inter-cell interference information reported from the UT, measuring inter-cell interference by the UT, and reporting the inter-cell interference information measured to the BS according to a result of measurement.

The step of selecting the master coordinated BS to provide services for the UT according to the inter-cell interference information may be as follows:
selecting a BS with minimum inter-cell interference in the inter-cell interference information as the master coordinated BS.

The method may further comprise: after the BS receives the inter-cell interference information reported from the UT, selecting an auxiliary coordinated BS for performing CoMP processing according to the inter-cell interference information.

The step of performing CoMP processing by the master coordinated BS may comprise:
determining, by the master coordinated BS, a CoMP transmission/reception operation, and informing the CoMP transmission/reception operation to the auxiliary coordinated BS.

There may be one or more auxiliary coordinated BSs.

An apparatus for CoMP processing, comprises a first determining module, a providing module, a receiving module and a first selecting module; wherein
the first determining module is arranged to determine bandwidth capability and performance requirement of a UT;
the providing module is arranged to make itself as a temporary master coordinated BS of the UT to provide services for the UT;
the receiving module is arranged to receive inter-cell interference information reported from the UT;
the first selecting module is arranged to select a master coordinated BS to provide services for the UT according to the inter-cell interference information received by the receiving module.

The master coordinated BS selected by the first selecting module may be a BS with minimum inter-cell interference in the inter-cell interference information.

The apparatus may further comprise:
a second selecting module, arranged to select an auxiliary coordinated BS for CoMP processing according to the inter-cell interference information received by the receiving module.

The apparatus may further comprise:
a second determining module, arranged to determine a CoMP transmission/reception operation, wherein the master coordinated BS is arranged to provide services for the UT during the CoMP processing;
an informing module, arranged to inform the CoMP transmission/reception operation determined by the second determining module to the auxiliary coordinated BS.

In the way that the BS selects the master coordinated BS to provide services for the UT according to the inter-cell interference information received from the UT, such that the master coordinated BS can perform the CoMP processing, the disclosure solves the problems that it may cause waste of resources during the implementation of the CoMP transmission/reception and may cause obviously decreasing of the cell-edge throughput, peak rate and average cell throughput in related technologies, further the signaling interaction between the coordinated BSs and the UT can be significantly reduced during CoMP transmission/reception, thereby decreasing the system overhead.

### BRIEF DESCRIPTION OF THE DRAWINGS

The drawings are provided for further understanding of the disclosure and form a part of this application. The exemplary embodiments of the disclosure and specifications thereof are only used for explaining the disclosure, and not intended to form any improper limit of the disclosure. In the drawings:
Fig. 1 shows a flow chart of a method for CoMP processing according to an embodiment of the disclosure;
Fig. 2 shows a detailed flow chart of a method for CoMP processing according to an embodiment of the disclosure;
Fig. 3 shows a structure diagram of an apparatus for CoMP processing according to an embodiment of the disclosure;
Fig. 4 shows a preferred structure diagram of an apparatus for CoMP processing according to an embodiment of the disclosure.

### DETAILED DESCRIPTION

In view of the problems of resource waste of multiple BSs and inter-cell interference caused by the CoMP transmission/reception in the related technologies, the embodiments of the disclosure provide a solution for the CoMP processing: according to bandwidth capability and performance requirement of a UT, a BS serving the UT is selected as a temporary master coordinated BS of the UT; the UT measures its wireless environment condition and reports it to the BS. In view of Inter-Cell Interference Coordination (ICIC), first a BS with minimum interference to the UT is selected as the master coordinated BS of the UT, the master coordinated BS is used for transmitting and receiving key information such as signaling of the CoMP transmission/reception; then a BS with serious interference to the UT is selected as an auxiliary coordinated BS, the auxiliary coordinated BS is mainly used for transmitting/retransmitting data of the UT. The master and auxiliary coordinated BSs determine the information such as resource scheduling of the CoMP transmission/reception through the scheduling of the master coordinated BS, and the master coordinated BS informs the auxiliary coordinated BS to complete the CoMP transmission/reception of the UT together.

It should be noted that the embodiments of the disclosure and the features in the embodiments can be combined together without conflict. The disclosure will be described in details below with reference to the drawings and in conjunction with the embodiments.

### Embodiments of the method

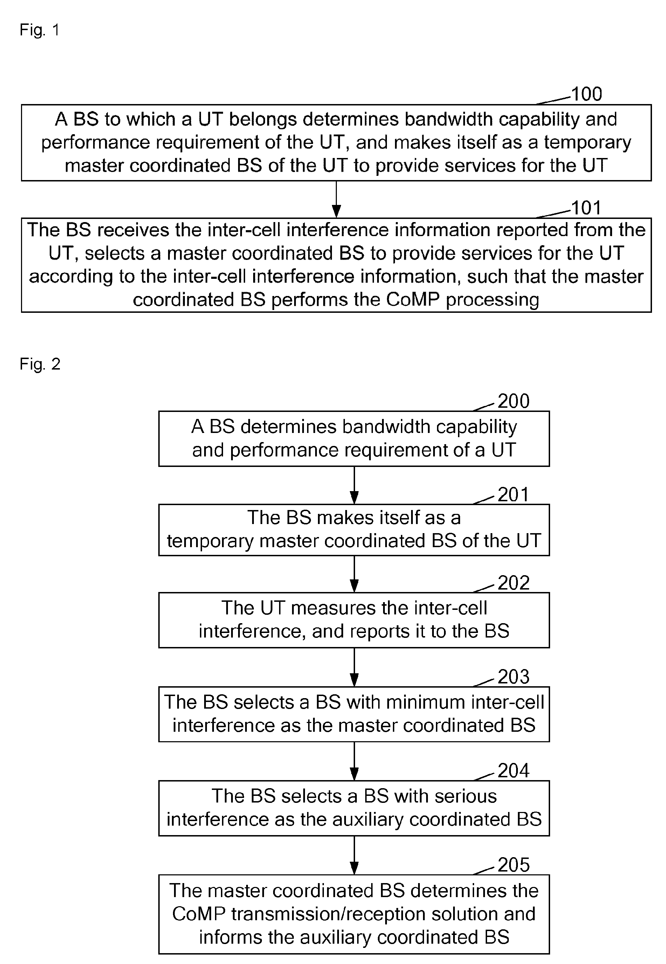

According to the embodiments of the disclosure, a method for CoMP processing is provided. The method is a method of CoMP transmission and reception based on the grouping of master and auxiliary coordinated BSs. Fig. 1 shows a flow chart of a method for CoMP processing according to an embodiment of the disclosure, as shown in Fig. 1, the method comprises:
step 100: a BS to which a UT belongs determines bandwidth capability and performance requirement of the UT, and makes itself as a temporary master coordinated BS of the UT to provide services for the UT;
step 101: the BS receives inter-cell interference information reported from the UT, selects a master coordinated BS to provide services for the UT according to the inter-cell interference information, such that the master coordinated BS can execute the CoMP processing.

Before step 101, the UT measures the inter-cell interference, and reports the inter-cell interference information to the BS according to the result of the measurement.

In step 101, the BS with minimum inter-cell interference is selected as the master coordinated BS according to the inter-cell interference information, an auxiliary coordinated BS for the CoMP processing is also selected according to the inter-cell interference information. There may be one or more auxiliary coordinated BSs. Then, the master coordinated BS determines CoMP transmission/reception operation, and informs the CoMP transmission/reception operation to the auxiliary coordinated BS.

By this embodiment, the signaling interaction between the coordinated BSs and the UT can be reduced during the CoMP transmission/reception, thereby decreasing the system overhead.

The implementation of the embodiments of the disclosure will be described in details below with reference to examples.

The embodiments of the disclosure can be applied in a wireless communication network. During the CoMP transmission/reception, according to the bandwidth capability and performance requirement of the UT and other selections, the BS serving the UT is selected as a temporary master coordinated BS of the UT; the UT measures the wireless environment condition thereof and reports it to the BS. In view of the ICIC, first a BS with minimum interference to the UT is selected as the master coordinated BS of the UT, the master coordinated BS is used for transmitting and receiving key information such as signaling of the CoMP transmission/reception; then a BS with serious interference to the UT is selected as the auxiliary coordinated BS, the auxiliary coordinated BS is mainly used for transmitting/retransmitting data of the UT. The master and auxiliary coordinated BSs determine the information such as resource scheduling of the CoMP transmission/reception through the scheduling of the master coordinated BS, and the master coordinated BS informs the auxiliary coordinated BS to complete the CoMP transmission/reception of the UT together. The signaling interaction between the coordinated BSs and the UT can be significantly reduced during the CoMP transmission/reception, thereby decreasing the system overhead.

Fig. 2 shows an implementation flow chart of a novel method for CoMP transmission and reception based on grouping of the master and auxiliary coordinated BSs according to an embodiment of the disclosure. As shown in Fig. 2, the method comprises:
step 200: a BS determines bandwidth capability and performance requirement of a UT;
step 201: the BS makes itself as a temporary master coordinated BS of the UT;
step S202: the UT measures inter-cell interference and reports it to the BS;
step 203: the BS selects a BS with minimum inter-cell interference as the master coordinated BS;
step 204: the BS selects a BS with serious interference as the auxiliary coordinated BS;
step 205: the master coordinated BS determines the solution of the CoMP transmission/reception and informs the auxiliary coordinated BS.

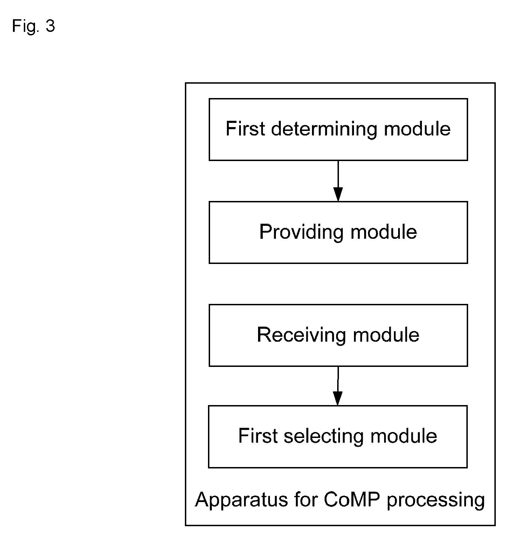

According to an embodiment of the disclosure, an apparatus for CoMP processing is provided. The apparatus can be used for realizing the method for CoMP processing, and the apparatus can be arranged in the BS. Fig. 3 shows a structure diagram of an apparatus for CoMP processing according to an embodiment of the disclosure. As shown in Fig. 3, the apparatus comprises a first determining module, a providing module, a receiving module and a first selecting module; and the above modules can be applied in the BS to which the UT belongs, wherein
the first determining module is arranged to determine bandwidth capability and performance requirement of the UT;
the providing module, connected with the first determining module, is arranged to make itself as the temporary master coordinated BS of the UT determined by the first determining module to provide services for the UT;
the receiving module is arranged to receive the inter-cell interference information reported from the UT;
the first selecting module, connected with the receiving module, is arranged to select a master coordinated BS to provide services for the UT, according to the inter-cell interference information received by the receiving module, such that the master coordinated BS can execute the CoMP processing.

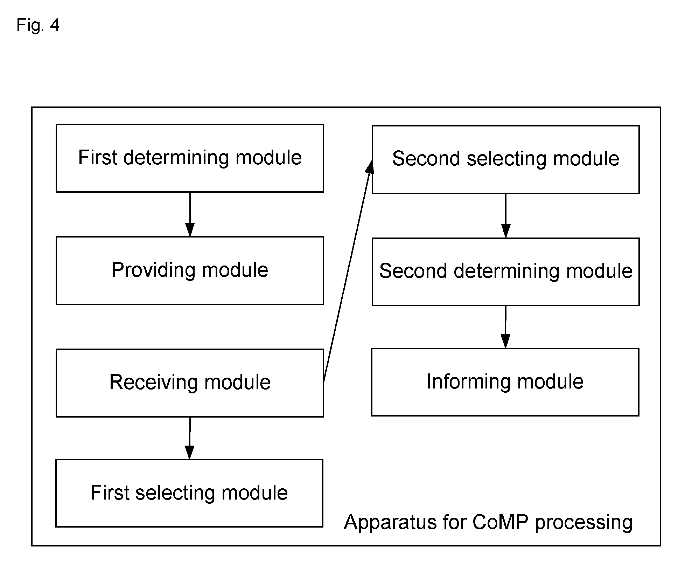

Fig. 4 shows a preferred structure diagram of an apparatus for CoMP processing according to an embodiment of the disclosure. As shown in Fig. 4, the apparatus further comprises a second selecting module, a second determining module and an informing module, wherein
the second selecting module, connected with the receiving module, is arranged to select an auxiliary coordinated BS for the CoMP processing according to the inter-cell interference information received by the receiving module; the second selecting module can be applied in the BS to which the UT belongs;
the second determining module, connected with the second selecting module, is arranged to determine CoMP transmission/reception operation; wherein the master coordinated BS is arranged to provide services for the UT during the CoMP processing;
the informing module, connected with the second determining module, is arranged to inform the CoMP transmission/reception operation determined by the second determining module to the auxiliary coordinated BS; the second determining module and the informing module can be applied in the master coordinated BS selected by the first selecting module.

In conclusion, through the embodiments of the disclosure, according to the bandwidth capability and performance requirement of the UT, the BS serving the UT is selected as the temporary master coordinated BS of the UT, and the UT measures its the wireless environment condition and reports it to the BS. In view of the ICIC, first the BS with minimum interference to the UT is selected as the master coordinated BS of the UT, the master coordinated BS is used for transmitting and receiving key information such as signaling of the CoMP transmission/reception; then the BS with serious interference to the UT is selected as the auxiliary coordinated BS, the auxiliary coordinated BS is mainly used for transmitting/retransmitting the data of the UT The master and auxiliary coordinated BSs determine the information such as resource scheduling of the CoMP transmission/reception through the scheduling of the master coordinated BS, and the master coordinated BS informs the auxiliary coordinated BS to complete the CoMP transmission/reception of the UT together. Compared with the prior art, the signaling interaction between the coordinated BSs and the UT can be significantly reduced during the CoMP transmission/reception, thereby decreasing the system overhead.

Obviously, those skilled in the art should understand that the above modules or steps of the disclosure can be realized through a general computing device, and can be concentrated in a single computing device or distributed in a network formed by multiple computing devices; optionally, they can be realized by program codes executable to the computing device, thus, the modules or steps can be stored in a storage device to be executed by a computing device or separately made into respective integrated circuit modules, or some modules or steps are made into a single integrated circuit module. In this way, the disclosure is not limited to the combination of any specific hardware and software.

The above is only preferred embodiments of the disclosure and not intended to limit the disclosure. For those skilled in the art, the disclosure can have various modifications and changes. Any modifications, equivalent replacements and improvements within the spirit and principle of the disclosure shall be included within the protection scope of the disclosure.

## Claims

1. A method for Coordinated Multiple Point (CoMP) processing, comprising:
determining, by a Base Station (BS) to which a User Terminal (UT) belongs, bandwidth capability and performance requirement of the UT, and making the BS itself as a temporary master coordinated BS of the UT to provide services for the UT;
selecting, by the BS to which the UT belongs, a master coordinated BS for performing CoMP processing to provide services for the UT according to inter-cell interference information reported from the UT

2. The method according to claim 1, further comprising, before the BS receives the inter-cell interference information reported from the UT, measuring inter-cell interference by the UT, and reporting the inter-cell interference information measured to the BS according to a result of measurement.

3. The method according to claim 1, wherein the step of selecting the master coordinated BS to provide services for the UT according to the inter-cell interference information is as follows:
selecting a BS with minimum inter-cell interference in the inter-cell interference information as the master coordinated BS.

4. The method according to claim 1, further comprising: after the BS receives the inter-cell interference information reported from the UT, selecting an auxiliary coordinated BS for performing CoMP processing according to the inter-cell interference information.

5. The method according to claim 4, wherein the step of performing CoMP processing by the master coordinated BS comprises:
determining, by the master coordinated BS, a CoMP transmission/reception operation, and informing the CoMP transmission/reception operation to the auxiliary coordinated BS.

6. The method according to claim 4 or 5, wherein there is one or more auxiliary coordinated BSs.

7. An apparatus for CoMP processing, comprising a first determining module, a providing module, a receiving module and a first selecting module; wherein
the first determining module is arranged to determine bandwidth capability and performance requirement of a UT;
the providing module is arranged to make itself as a temporary master coordinated BS of the UT to provide services for the UT;
the receiving module is arranged to receive inter-cell interference information reported from the UT;
the first selecting module is arranged to select a master coordinated BS to provide services for the UT according to the inter-cell interference information received by the receiving module.

8. The apparatus according to claim 7, wherein the master coordinated BS selected by the first selecting module is a BS with minimum inter-cell interference in the inter-cell interference information.

9. The apparatus according to claim 7 or 8, further comprising:
a second selecting module, arranged to select an auxiliary coordinated BS for CoMP processing according to the inter-cell interference information received by the receiving module.

10. The apparatus for CoMP processing according to claim 9, further comprising:
a second determining module, arranged to determine a CoMP transmission/reception operation, wherein the master coordinated BS is arranged to provide services for the UT during the CoMP processing;
an informing module, arranged to inform the CoMP transmission/reception operation determined by the second determining module to the auxiliary coordinated BS.
